# EUROPEAN PATENT SPECIFICATION

(11) **EP 1 560 199 B1**
(45) Date of publication and mention of the grant of the patent: **09.07.2008**
(21) Application number: 04001948.1
(22) Date of filing: 29.01.2004
(51) Int. Cl.: G10L 15/22, B60K 37/06, B60R 16/02, H04M 1/27

(54) **Multimodal data input**
Multimodale Dateneingabe
Entrée multimodale de données

(43) Date of publication of application: 03.08.2005
(73) Proprietor: Harman Becker Automotive Systems GmbH, 76307 Karlsbad (DE); Daimler AG, 70327 Stuttgart (DE)
(72) Inventor: König, Lars, 89075 Ulm (DE); Reh, Frank, 71701 Schwiegerdingen (DE)
(74) Representative: Grünecker, Kinkeldey, Stockmair & Schwanhäusser Anwaltssozietät

(56) References cited:
- WO-A-99/57648
- GB-A- 2 343 779
- US-A- 4 827 520
- US-A- 6 012 030
- US-A1- 2002 065 584

## Description

The invention is directed to an apparatus for controlling at least one electronic device comprising two input means, a haptic input means and an acoustic input means, and a method for inputting data using the apparatus comprising the two input means.

Most apparatus used in the daily life are controlled by commands which are input by the user using haptic input means such as keyboards, push buttons or the like. Sometimes users find it tedious to find their way through the different control levels and to input the correct commands or data. Therefore, recently, speech dialogue systems have been developed which allow to also control an apparatus by providing speech commands to the speech dialogue system which analyses the received acoustic input and determines the speech commands which are then transmitted to the apparatus where the command is carried out.

Speech operated devices are particularly useful in an environment where the user needs his hands for other actions, like, for example, in a vehicular environment. In a car, the driver should always keep his hands on the steering wheel, except for short periods when it is necessary to shift gears in order to ensure a safe driving. Thus, in order to reduce the danger of accidents, more and more car manufacturers start providing speech operated devices such as car navigation systems, car radios, compact disk players or mobile phones. Most of the time, the devices are by default operated using haptic control keys and if the user wishes to operate a device by using the speech dialogue system he can activate a push-to-talk lever (PTT), whereupon speech commands can be input.

Those prior art systems, however, have the drawback that the data input using the two modes is still very tedious and lacks user-friendliness. In particular, in the case that a started speech dialogue cannot be brought to an end due to circumstances such as a too high noise level or lack of understandable vocabulary by the speech dialogue system, the user is forced to go back to the default input means and has to restart the inputting action again from the beginning.

US 6 012 030 discloses the management of speech prompts and tactile inputs in multimodal interfaces. The multimodal user interface comprises a speech interface and a non-speech interface, eg. a graphical or tactile user interface and a means for dynamically switching between a background state of the speech interface and the foreground state of the speech interface.

It is therefore the problem underlying the invention to provide an apparatus for controlling at least one electronic device allowing inputting of instructions in an easier and more user-friendly manner.

This problem is solved by an apparatus for controlling at least one electronic device according to claim 1 and a method for inputting data according to claim 10. Accordingly the apparatus for controlling at least one electronic device comprises a haptic input means, an acoustic input means, and a switching means for switching between the acoustic input means and the haptic input means, such that an input is received by the apparatus via only one of the input means at a time.

Since the apparatus provides a haptic input means and an acoustic input means, the user can always opt for the input means which he considers to be most suited. Furthermore, the switching means provides him with the possibility to switch any time between the two possible input means. In addition, due to the switching means the apparatus receives the provided input from the user via only one of the input means at a time. That is, there is a clear separation between haptic and acoustic inputting of data which provides ergonomic advantages for carrying out dialogues between a user and an apparatus. It is thus, for example, not possible to mix at the same time haptic and acoustic input which may lead to a malfunction of the apparatus as the speech dialogue system will not know whether it should consider all input, the acoustic input only or the haptic input only. Thus, with the apparatus according to the invention, it becomes possible to provide input in an easy, flexible and user-friendly way, whereby unintentional handling errors can be greatly reduced.

Herein an input can be a character, like alpha numerical characters, a word or a number of words.

The acoustic input means comprises a speed recognition means and the switching means is configured to automatically switch from the acoustic input means to the haptic input means if an input is received via the acoustic input means and the speech recognition means detects a background noise level being higher than a predetermined threshold level. If the noise level is so high that the speech recognition means has difficulty in determining the speech commands and, therefore, controlling the electronic device via speech control is made difficult, it is advantageous to switch automatically to the haptic input means where a high background noise level cannot interfere with the inputting of data. Thus, the user-friendliness is further enhanced.

Acoustic signals comprising the speech commands from the user together with background noise are received by the speech recognition means which is capable of determining the speech commands. Thereby, the speech recognition means may be further assisted by noise reduction means or echo cancellation means.

According to a preferred embodiment, the switching means can comprise a haptic switching means and/or an acoustic switching means. If the user is currently inputting data via the acoustic input means, the user may switch to the haptic input means by either pronouncing a switch command such as the term "key control", or push a switch key. For example, the push-to-talk lever can be configured as a switch key. Thus it does not only fulfill the role of switching on and off the speech dialogue but also enables to switch from the acoustic input mode to the haptic input mode. On the other hand, if the user is currently in the haptic input mode with the acoustic input means being blocked, an activation of a switch key, like the push-to-talk lever, shall switch to the acoustic input mode.

If the apparatus receives input via the haptic input means, receiving input via the acoustic input means may be hinderedat various locations. For example, the microphone or the speech recognition means could be switched off, the data transfer from the microphone to the speech recognition means could be blocked, or the further transmission from the speech recognition means may be blocked.

According to an advantageous embodiment, the apparatus can comprise optical and/or acoustic output means to output at least a part of the input optically and/or acoustically. Thus, the user will be informed about what was already input. For example, the apparatus may output a telephone number or a target location the user has previously input.

Preferably, the optical and/or acoustical output means can be configured to output a signal or a message if the switching means automatically switches from the acoustic input means to the haptic input means. This message or signal will inform the user that due to high background noise level it is no longer possible to continue with the acoustic input, and that therefore the user shall now use the haptic input means which has been activated to receive input. For example, the optical output means such as a display may display a message like "please provide input via a keyboard" or the acoustic output means may provide a speech output like "acoustic input not possible, please use keyboard", thereby further enhancing the user-friendliness and the reliability.

According to an advantageous embodiment, the haptic input means can comprise a key, and the switching means can be configured to switch to the haptic input means upon activation of the key. For example, the user may have given the apparatus the speech command to instruct the CD changer to switch from a first CD to a second CD, but then omits to give the speech command of playing this second CD, but instead pushes the play key of the CD player. Then, the switching means automatically switches from the acoustic input means to the haptic input means and the CD player will start playing the second CD. Thereby, a further enhancement of the user-friendliness is obtained, as the user does not have to think about that prior to being able to use haptic input he has to provide a dedicated switching command either by speech or by pressing a dedicated switch key.

According to a preferred embodiment, the apparatus can further comprise a command determination means to determine a control command for the at least one electronic device out of the input received via the haptic input means and/or the acoustic input means. At the exit of the acoustic and haptic input means the respective data format of the input shall be the same, such that starting from this the command determination means can identify the corresponding control commands and send them to the to be controlled electronic device. To bring the input into a common format a converter means may be provided, which could eventually be part of the input means. Herein the term "control command" comprises commands which provide parameters to an electronic device, like inputting a telephone number or a target location, but also commands which lead an electronic device to carry out an action, like carrying out a telephone call or calculating a navigation route.

According to a preferred embodiment, the command determination means can further comprise a decision means to decide whether a control command can be determined out of a first input received via one input means or whether in addition a second input via the second input means is necessary to determine the control command. This means that it is possible to switch the input means, even if an input corresponding to one control command has not completely been input via one input means only, but by using both input means. For example, in the abovementioned case of changing from one CD to another in a CD changer, the user may acoustically provide the command to change the CD, but then provides the identifier of the CD using the haptic input means. With the decision means the command determination means therefore will identify that the acoustic input was not sufficient to carry out the full command and therefore awaits the necessary second input from the second input means. Eventually, the apparatus may output a signal towards the user informing him that he is still lacking an input in order to carry out the command.

In an advantageous embodiment, the command determination means can further comprise a combining means for combining an input received via the haptic input means and an input received via the acoustic input means prior to determining the control command. The combining means, therefore, provides the possibility to make out of the two inputs received from the two different input means, one input only which can then be analyzed.

Preferably, the apparatus can further comprise a storage means for storing the input received via the haptic and/or acoustic input means prior to determining the control command. Storing those inputs has the advantage that the command determination means may compare the input received form the different input means and check whether the input is consistent meaning that there is no overlap or something missing. For example, the user may unintentionally repeat part of the already provided input after having switched to the second input means or he may have omitted part of the necessary input. If the command determination means identifies a consistency problem of the input and the user will be informed via the output means that input is missing or has been provided in duplicate.

Preferably, the apparatus controls a plurality of electronic devices. In a vehicular environment, the apparatus can, for example, be part of a car radio, a cellular phone, a car navigation system, or an air conditioning unit. The apparatus can also be a part of a control head unit controlling some or all of the previously mentioned examples of electronic devices.

The invention further provides a vehicle, in particular a car, comprising one of the previously described apparatus.

Furthermore, the invention provides a method according to claim 10 for inputting data using an apparatus comprising a haptic input means, an acoustic input means, and a switching means for switching between the input means comprising the steps of:
- receiving input via one of the input means,
- switching from the one input means to the other input means upon receipt of a switching command by the switching means, and
- receiving input via the other input means,
wherein input is received by the apparatus via only one input means at a time.

As already explained above, this method allows inputting of control commands in an easy and flexible manner, thereby enhancing the user-friendliness of operating an electronic device. This is because the user has the possibility to use the input means he considers to be the most appropriate to use and furthermore, he can switch between the input means at any time. The fact that inputting is possible via one input means at a time furthermore reduces the possibility of errors.

The method further comprises the step of detecting a background noise level by a speech recognition means being part of the acoustic input means and the step of switching comprise automatically switching from the acoustic input means to the haptic input means if the background noise level is higher than a predetermined threshold level. If, for example, the method is used in a car and background noise level is raised due to entering of a tunnel or passengers begin talking, the acoustic inputting means identifies that control commands cannot be received acoustically anymore and thus automatically switches to the haptic input means.

Advantageously, the step of switching can comprise switching to the haptic input means upon activation of a key, wherein the key is part of the haptic input means. This furthermore enhances the user-friendliness as the user does not have to recall that he needs to push a special key or announce a special command, but can just press the key of one of the electronic devices to switch. In addition, the control action linked to the key to control the electronic device will also be carried.

Advantageously, the method can further comprise the step of outputting a message or signal using optical and/or acoustical output means, in the case that the switching means automatically switches from the acoustic input means to the haptic input means due to a high background noise level. Thus, the user will be informed that inputting via the acoustic input means is no longer possible, and that he now should use the haptic input means to continue inputting data. This further enhances the user-friendliness.

According to a further embodiment, the method can further comprise the step of determining a control command out of the received input and outputting the control command to an electronic device. This step can in addition comprise a step of converting the data into a common format using a converter means.

Preferably, the method can further comprise the step of storing the input received via the haptic and the acoustic input means prior to determining the control command. Thus the input received via one channel can eventually be compared with input received via the second channel and it can be checked whether there are inconsistencies between the different inputs.

According to an advantageous embodiment, the method can further comprise the step of deciding whether out of first input received via one input means a control command can be determined or whether in addition a second input via the second input means is necessary to determine the control command. Eventually, a message or a signal may be output to the user informing him that an input is lacking in order to carry out the command.

Advantageously, the method can further comprise the step of combining an input received via one input means with an input received via the other input means prior to determining the control command. This gives the possibility to make out of the two inputs received from the two different input means one input only which can then be analyzed.

Preferably, the method can further comprise the step of outputting at least a part of the input using optical and/or acoustical output means. Thereby the user is always informed about the input already provided. For example, the output means may display a previously input telephone number in the case that the user wants to carry out a telephone call.

The invention furthermore provides a computer program product, comprising one or more computer readable media having computer-executable instructions for performing the steps of the method of one of the preceding claims.

Further features and advantages of the present invention will be described with reference to the drawings:
Fig. 1a depicts an exemplary apparatus, wherein the apparatus can receive an input only via the acoustic input means;
Fig. 1b depicts an apparatus wherein the apparatus can receive an input only via the haptic input means;
Fig. 2 is a flow diagram illustrating an exemplary method of inputting data according to the invention;
Fig. 3 is a flow diagram illustrating the switching from acoustic input means to haptic input means following the activation of a key of the haptic input means;
Fig. 4 is a flow diagram illustrating the switching from acoustic input means to haptic input means following the detection of a high background noise level by the acoustic input means; and
Fig. 5 is a flow diagram illustrating the functioning of the decision means checking whether a first input corresponds to a control command or whether a second input is needed to complete the control command.

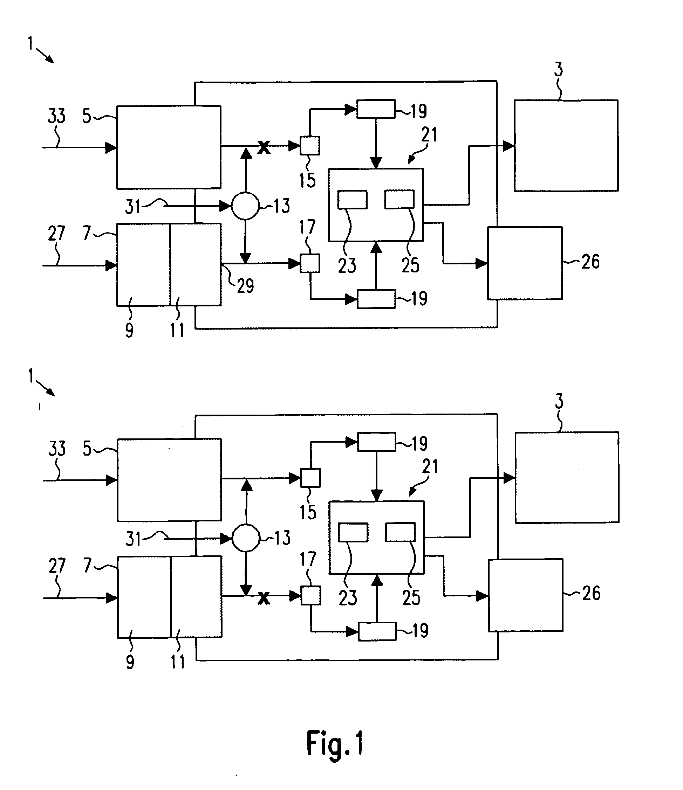

Fig.1a and 1b show an exemplary apparatus 1. An electronic device 3 is in connection with the apparatus 1. The electronic device 3 may be a car radio, a compact disk player, a mobile phone, a car navigation system, an air conditioning system or the like. In a variant the apparatus 1 may also be in connection with more than one electronic device 3.

The apparatus 1 comprises two input means, a haptic input means 5 such as keys, keyboard, switches or levers and an acoustic input means 7. The acoustic input means 7 is constituted by a microphone 9 for receiving acoustic signals and transforming them into electric signals, and a speech recognition means 11 which is analyzing the electrical signals received from the microphone 9 and filters out speech commands. The speech recognition means 11 can eventually be supported by filters, noise reduction means and/or echo reduction means.

The apparatus 1 further comprises a switching means 13 for switching between the haptic input means 5 and the acoustic input means 7. Actually Figs. 1a and 1b both show the same apparatus with the difference, however, that in Fig.1a the acoustic input means 7 is activated so that input is received by the apparatus 1 via this input means, and that in Fig.1b it is the haptic input means 5 via which input is received by the apparatus 1.

The received input is then transmitted to converter means 13 and 15 for converting the input respectively coming from the haptic and acoustic input means 5 and 7 into a common data format, like e.g. the ASCII data format. The converted input is then stored in a storage means 19, which in this embodiment comprises two storage devices, but could of course also be only one device in which both the input from the haptic input means (5) and the input from the acoustic input means (7) is stored.

Furthermore, a command determination means 21 comprising a decision means 23 and a combining means 23 is provided which receives the input from the storage means 19. The decision means 23 decides whether a first input received via one input means is processable into a control command or whether a second input via the second input means is necessary to complete the control command. In that case the combining means 23 combines the two inputs into one, from which the control command is determined by the command determination means 21. The completed control command is then output to the electronic device 3.

The command determination means 21 furthermore is also connected with an output means 26 which can be an acoustical output or an optical output such as a display.

It is understood that the arrangement of the various means shown in Fig. 1 is only one of several possibilities. For example, the representation does not imply that the different elements of the apparatus are fixedly joined together, but that they could also be different unities connected via appropriate connections. The output means 26 may be shared with the electronic devices 3. Furthermore, the location on the signal path at which the switching means 13 switches between the input means is not limited to be positioned between the two input means and the converter means 15 and 17, but can be provided at various locations. For example, the switching means 13 when blocking the acoustic input may switch off (or put in standby mode) the microphone 9, or switch off the speech recognition means 11, or block the interface between the microphone 9 and the speech recognition means 11, or may block the connection between the speech recognition means 11 and the converter means 17. The same is valid for the haptic input means 5, where either the haptic input means 5 itself, or the interface between the haptic input means 5 and the converter means 15 may be switched off or blocked. Furthermore, the conversion into a common format may be carried out already inside the input means 5, 7.

The switching means 13 comprises haptic switching means being, for example, part of a keyboard (not shown) which is also used as the haptic input means 5 or the 'push to talk' lever, and/or can be an acoustic switching means such as, for example, the command "switch to keyboard", which can be understood by the speech recognition means 11. Thus the vocabulary set used by the speech recognition means 11 shall comprise the switching commands.

A typical dialogue between a user, the apparatus 1 and the electronic device 3 could be as follows. By pressing the push-to-talk lever (not shown) the user activates the apparatus 1. As the user pushes the push-to-talk lever the apparatus 1 is brought in the acoustic input mode, where the input of the user is provided via the acoustical input means 7. Thus the switching means 13 switches on the connection between the acoustical input means 7 and the converter means 17, whereas at the same time the connection between the haptic input means 5 and the converter means 15 becomes blocked. This is depicted by the symbol "X" in Fig. 1a. Then the user provides his acoustic input 27 which is transferred into electrical signals via the microphone 9. The electrical signals are then further processed in the speech recognition means 11 where the provided speech input is identified and output 29 towards the converter means 17 where it is brought into the common data format. Eventually there could be no need for this converter means 21 in the case that the speech recognition means 11 already provides the filtered out speech commands in the common data format. The input is then stored in the storage means 19 and further transmitted to the command determination means 21 where the decision means 23 checks whether the provided speech input is corresponding to a control command. If this is the case this control command is output towards the electronic device 3 which carries out the command. At the same time the output means 26 provides the user with the information that the control command has been understood or is repeating the speech input.

Upon activation of the switching means 13, for example, activating a switch key 31 or by providing an acoustical switching command 31, the switching means 13 closes the connection between the acoustic input means 7 and the converter means 17 and opens the connection between the haptic input means 5 and the converter means 15 as illustrated in Fig. 1b. Then the user can provide haptic input 33 via the haptic input means 5, whereas at the same time acoustic input 27 can no longer enter the apparatus 1, as depicted by the "X" on the connection between the acoustic input means 7 and the converter means 15. The haptic input 33 is then transferred to the converter means 15 bringing the haptic input 33 into the common data format, just as previously described with the converter means 17 converting the acoustic input 27. The converted input is then stored in the storage means 19 and forwarded to the command determination means 21 where the decision means 23, as previously described, checks whether the input corresponds to a control command or not. In the case the input did not correspond to a control command, the command determination means 21 awaits a second input from the other input means and when this second input is received, the combining means 25 combines the two inputs into one and the decision means 23 checks whether the combined input now corresponds to a complete control command. The control command is then output towards the electronic device 3 and information is provided via the output means 17 towards the user.

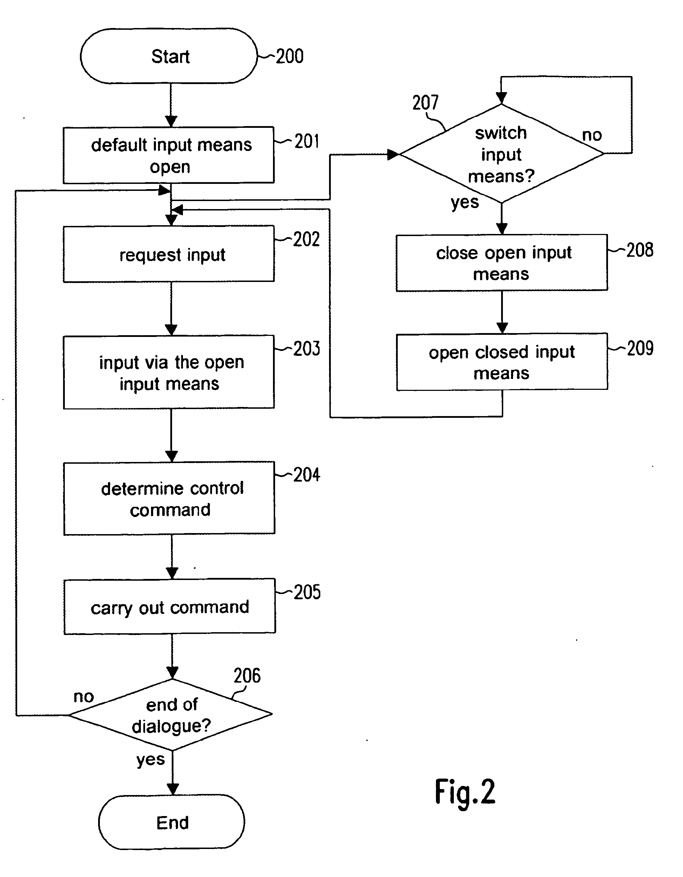

Fig. 2 illustrates an exemplary method for inputting data. The method will be described using the apparatus for controlling at least one electronic device, as illustrated in Fig. 1. It is, however, understood that the use of the apparatus 1 is one possibility and that other examples of such an apparatus may also be suitable for carrying out the method for inputting data. Furthermore, all the properties of the elements which are part of the apparatus 1 of Fig. 1 are incorporated herewith by reference into the description of the method illustrated in Fig. 2, without them being explicitly stated again.

After starting a dialogue (step 200) between the user and the apparatus 1, during which the user inputs at least one command to control the electronic device 3, the default input means of the apparatus 1 is opened for data input (step 201). For example, by pressing the push-to-talk lever the default input means is the acoustic input means 7 and in the case that the user hits another key, for example, one of the electronic device 3, the apparatus 1 is configured such that the haptic input means 5 is open, so that the apparatus 1 can receive input via this input means. In step 202 the apparatus 1 requests an input from the user. This request may be provided either acoustically or optically via the output means 26. In step 203 the apparatus 1 then receives input from the user via the open input means. In this embodiment the input corresponds to a word or a number of words containing a word which can be understood by the speech recognition means 11.

In step 204 the input is analyzed and the command determination means 21 determines a corresponding control command. The identified control command is then output to the electronic device 3 where the command is carried out (step 205). In step 206 apparatus 1 then checks whether the end of the speech dialogue has been reached. If this is not the case the steps 202 to 205 are repeated until the end of the dialogue is actually reached.

At the same time, in parallel, the apparatus 1 checks whether a switching command has been provided to the switching means 13 (step 207). Step 207 actually is continuously repeated until such a switching command has been provided. Then in step 208 the currently open input means is closed and in step 209 the previously closed input means is opened, so that the apparatus 1 can, in step 202, receive the input via this input means while at the same time no further input is possible via the first input means.

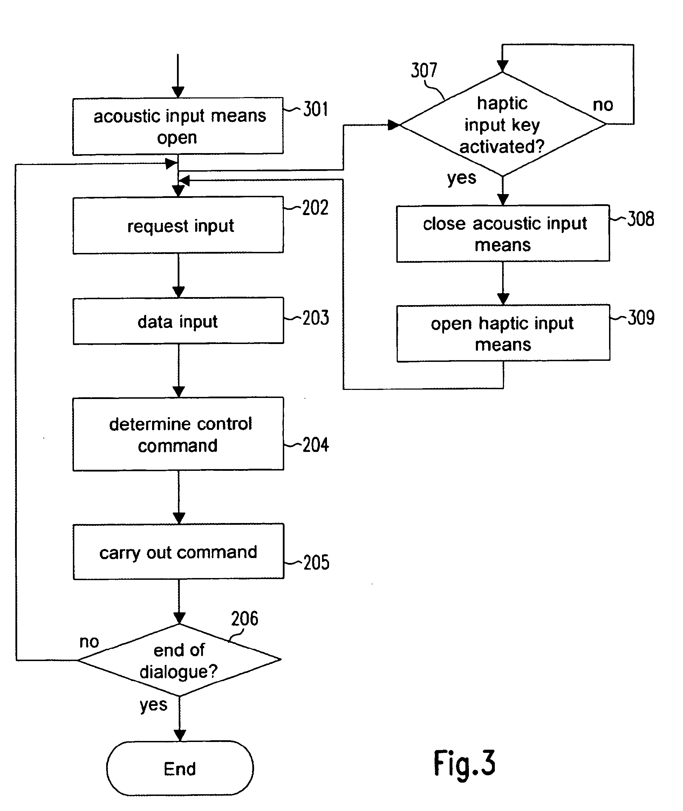

Fig. 3 illustrates a second exemplary method for inputting data, using the apparatus 1 as previously described. Of course other suitable apparatus may also be used. Steps having reference numerals corresponding to steps of the inventive method as described with respect to Fig. 2 do have the same properties and are incorporated herewith by reference, without them being explicitly stated again. Furthermore, all the properties of the elements which are part of the apparatus 1 of Fig. 1 are also incorporated herewith by reference, without them being explicitly stated again. The second exemplary method is different compared to the first one in the steps 301 and 307 - 309.

In step 301 the acoustic input means 7 is activated, so that the apparatus 1 can receive input via this channel only. In parallel to the already described inputting steps 202 - 206, the apparatus 1 checks in step 307 if a key, being part of the haptic input means 5, has been activated or not. If this is not the case, step 307 is repeated until such an activation is identified. Then the process proceeds with step 308 consisting in that the apparatus 1, via the switching means 13, closes the acoustic input means 7 such that acoustic input can no longer be received by the apparatus 1 and in step 309 the haptic input means 5 will be opened, such that haptic input can be received by the apparatus.

As an example, the user may wish to carry out a telephone call. First he pushes the push-to-talk lever to start the application and then informs the apparatus 1 that he wants to phone by providing the speech input "telephone call". Then he decides to input the telephone number via the keyboard of the telephone and not via speech input anymore. By pressing the first number of the telephone number the apparatus 1 will switch from the acoustic input means 7 to the haptic input means 5, so that the user effectively can input the telephone number via the keyboard of the telephone. It should be mentioned that the activation of the key of the haptic input means 5 has therefore two functions, first of all to switch from the acoustic means 7 to the haptic means 5 and secondly, to provide the first digit of the complete telephone number.

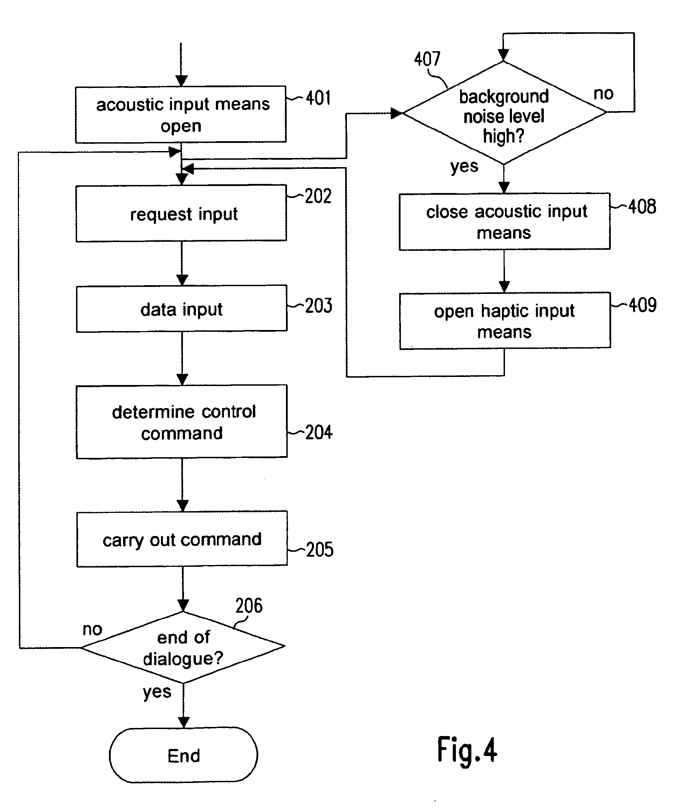

Fig. 4 illustrates an embodiment of the inventive method for inputting data, using the apparatus 1 as previously described. Of course other suitable apparatus may also be used. Steps having reference numerals corresponding to steps of the method as described with respect to Fig. 2 do have the same properties and are incorporated herewith by reference, without them being explicitly stated again. Furthermore, all the properties of the elements which are part of the apparatus 1 of Fig. 1 are also incorporated herewith by reference, without them being explicitly stated again. The embodiment of the method according to this invention is different compared to the first and second exemplary methods in the steps 401 and 407 - 409.

In step 401 it is the acoustic input means 7 of the apparatus 1 which is open such that the apparatus 1 receives input only via this input means. Steps 202 - 206 then correspond to the inputting steps as described in Fig. 2. In parallel the apparatus 1 is configured such that the speech recognition means 11 of the acoustic input means 9 analyses whether the background noise level is higher than a predetermined threshold value, indicating that it becomes difficult for the speech recognition means 11 to identy the speech commands, or not. If the background noise level is lower, then step 417 is repeated unless the situation occurs where the background noise level becomes high. This can, for example, occur when the apparatus 1 is used in a vehicle and the vehicle enters a tunnel or that several people inside the vehicle begin talking.

When such a high background noise level is detected the process proceeds with step 408 wherein the acoustic input means 7 is blocked such that input is no longer received by the apparatus 1 via the acoustic input means 7, and in step 409 the haptic input means 5 is opened such that in the following input can be received by the apparatus 1 via this input means only. In a variant the output means 26 can then inform the user that the acoustic input means 7 can be no longer used to input data and that the haptic input means 5 should now be used.

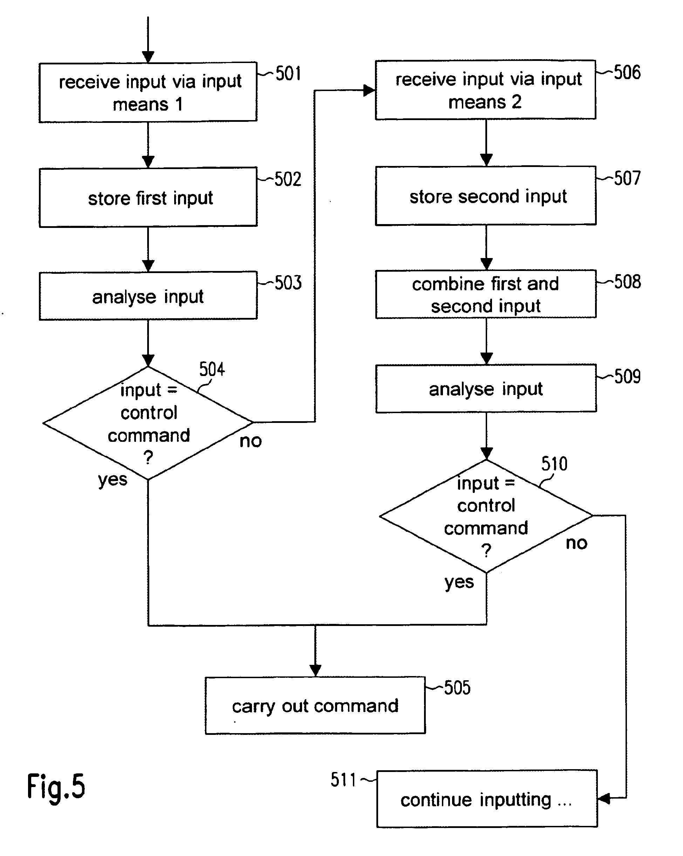

Fig. 5 illustrates a further exemplary method for inputting data, using the apparatus 1 as previously described. Of course other suitable apparatus may also be used. All the properties of the elements which are part of the apparatus 1 of Fig. 1 are incorporated herewith by reference, without them being explicitly stated again.

In step 501 the apparatus 1 receives input via input means one, which is either the haptic input means 5 or the acoustic input means 7. The input is then brought into a common data format and stored in the storage means 19. The command determination means 21 then analyses the input and the decision means 23 decides in step 504 whether the provided input corresponds to a control command for controlling the electronic device 3 or whether further input is necessary to complete the control command. If the provided input via input means one actually corresponds to a control command the process proceeds with step 505 wherein the command determination means 21 outputs the control command to the electronic device 3 which carries out the control command.

If, however, in step 504 the decision means 23 has identified that the provided first input does not correspond to a control command, the process proceeds with step 506 wherein the apparatus 1 receives a second input via the second input means. This second input is, after having been brought into the common data format, stored in the storage means 19 (step 507). In step 508 the first and second inputs are then combined into one input by the combining means 25. In step 509 the combined input is then analysed by the decision means 23. If the decision means 23 identifies that the combined input does correspond to a control command the process proceeds with step 505 wherein the control command is output by the command determination means 21 to the electronic device 3 and carried out by the latter. If again the input is not complete, the process continues with step 511 which represents a continuation of inputting data according to the previously described process steps.

In this method it is understood that following the receipt of the input via the first input means a switching command has been received by the switching means 13.

The above described methods do not necessarily represent independent processes, but can actually be realized all or partially in parallel.

The above described apparatus 1 and the inventive method for inputting data are, in particular, suited to be employed in a vehicular environment as for the driver of a car it is of importance that he can keep his hands on the steering wheel and that he has the possibility to control the electronic device present in his vehicle in a flexible and safe manner. However, the above described invention may, of course, also be employed for any electronic device which needs input from a user.

## Claims

1. Apparatus for controlling at least one electronic device (3), comprising a haptic input means (5), an acoustic input means (7), and a switching means (13) for switching between the acoustic input means (7) and the haptic input means (5), such that an input is received by the apparatus via only one of the input means (5, 7) at a time,
wherein the acoustic input means comprises a speech recognition means (11), and wherein the switching means (13) is further configured to automatically switch from the acoustic input means (7) to the haptic input means (5) if an input is received via the acoustic input means (7) and the speech recognition means (11) detects a background noise level being higher than a predetermined threshold level.

2. Apparatus according to claim 1, wherein the switching means (13) comprises a haptic switching means and/or an acoustic switching means.

3. Apparatus according to one of claims 1 to 2, further comprising optical and/or acoustical output means (26) configured to output at least part of the input.

4. Apparatus according to claim 3, wherein the optical and/or acoustical output means (26) is configured to output a signal if the switching means (13) automatically switches from the acoustic input means (7) to the haptic input means (5).

5. Apparatus according to one of claims 1 to 4, wherein the haptic input means (5) comprises a key, and wherein the switching means (13) is configured to switch to the haptic input means (5) upon activation of the key.

6. Apparatus according to one of claims 1 to 5, further comprising a command determination means (21) to determine a control command for the at least one electronic device (3) out of the input received via the haptic input means (5) and/or the acoustic input means (7).

7. Apparatus according to claim 6, wherein the command determination means (21) further comprises a decision means (23) to decide whether a control command can be determined out of a first input received via one input means (5, 7) or whether in addition a second input via the second input means (7, 5) is necessary to determine the control command.

8. Apparatus according to claim 6 or 7, wherein the command determination means (21) further comprises a combining means (25) for combining an input received via the haptic input means (5) and an input received via the acoustic input means (7) prior to determining the control command.

9. Apparatus according to one of claims 6 to 8, further comprising a storage means (19) for storing the input received via the haptic and/or acoustic input means (5, 7) prior to determining the control command.

10. Method for inputting data, using an apparatus comprising a haptic input means (5) and an acoustic input means (7), and a switching means (13) for switching between the input means, comprising the steps of:
- receiving input via one of the input means (5, 7),
- switching from the one input means (5, 7) to the other input means (7, 5) upon receipt of a switching command (208, 209, 308, 309, 408, 409) by the switching means (13), and
- receiving input via the other input means (7, 5),
wherein input is received by the apparatus via only one input means (5, 7) at a time,
and further comprising the step of detecting a background noise level (407) by a speech recognition means (11) being part of the acoustic input means (9) and wherein the step of switching (408 + 409) comprises automatically switching from the acoustic input means (7) to the haptic input means (5) if the background noise level is higher than a predetermined threshold level.

11. Method according to claim 10, wherein the step of switching (308, 309) comprises switching to the haptic input means (5) upon activation of a key, wherein the key is part of the haptic input means (5).

12. Method according to claim 10 or 11, further comprising the step of outputting a signal using optical and/or acoustical output means (26), in the case that the switching means (13) automatically switches from the acoustic input means (7) to the haptic input means (5).

13. Method according to one of claims 10 to 12, further comprising the step of determining (204) a control command out of the received input and outputting the control command to an electronic device (3).

14. Method according to claim 13, further comprising the step of storing .(502, 507) the input received via the haptic and/or acoustic input means (5, 7) prior to determining the control command.

15. Method according to claim 13 or 14, further comprising the step of deciding (504) whether out of first input (501) received via one input means (5, 7) a control command can be determined or whether in addition a second input (506) via the second input means (7, 5) is necessary to determine the control command.

16. Method according to one of claims 13 to 15, further comprising the step of combining (508) an input (501) received via one input means with an input (506) received via the other input means prior to determining the control command.

17. Method according one of claims 10 to 16, further comprising the step of outputting at least a part of the input using optical and/or acoustical output means (26).

18. Computer program product, comprising one or more computer readable media having computer-executable instructions adapted to perform the steps of the method of one of the preceding claims.

## Patentansprüche

1. Vorrichtung zum Steuern zumindest einer elektronischen Einrichtung (3), umfassend eine haptischen Eingabeeinrichtung (5), eine akustischen Eingabeeinrichtung (7) und eine Schalteinrichtung (13) zum Schalten zwischen der akustischen Eingabeeinrichtung (7) und der haptischen Eingabeeinrichtung (5), so dass eine Eingabe von der Vorrichtung lediglich über eine der Eingabeeinrichtungen (5, 7) zu einer Zeit empfangen wird,
in der die akustische Eingabeeinrichtung eine Spracherkennungseinrichtung (11) umfasst, und in der die Schalteinrichtung (13) weiterhin dazu ausgebildet ist, automatisch von der akustischen Eingabeeinrichtung (7) auf die haptische Eingabeeinrichtung (5) zu schalten, wenn eine Eingabe über die akustische Eingabeeinrichtung (7) empfangen wird und die Spracherkennungseinrichtung (11) ein Hintergrundgeräuschniveau detektiert, das höher als eine vorbestimmte Schwelle liegt.

2. Vorrichtung gemäß Anspruch 1, in der die Schalteinrichtung (13) eine haptische Schalteinrichtung und/oder eine akustische Schalteinrichtung umfasst.

3. Vorrichtung gemäß einem der Ansprüche 1 bis 2, die weiterhin eine optische und/oder akustische Ausgabeeinrichtung (26) umfasst, die dazu ausgebildet ist, zumindest einen Teil der Eingabe auszugeben.

4. Vorrichtung gemäß Anspruch 3, in der die optische und/oder akustische Ausgabeeinrichtung (26) dazu ausgebildet ist, ein Signal auszugeben, wenn die Schalteinrichtung (13) automatisch von der akustischen Eingabeeinrichtung (7) auf die haptische Eingabeeinrichtung (5) schaltet.

5. Vorrichtung gemäß einem der Ansprüche 1 bis 4, in der die haptische Eingabeeinrichtung (5) eine Taste umfasst, und in der die Schalteinrichtung (13) dazu ausgebildet ist, bei Betätigung der Taste auf die haptische Eingabeeinrichtung (5) zu schalten.

6. Vorrichtung gemäß einem der Ansprüche 1 bis 5, die weiterhin eine Befehlsbestimmungseinrichtung (21) zum Bestimmen eines Steuerbefehls für die zumindest eine elektronische Einrichtung (3) aus der Eingabe, die über die haptische Schalteinrichtung (5) und/oder die akustische Schalteinrichtung (7) empfangen wird, umfasst.

7. Vorrichtung gemäß Anspruch 6, in der die Befehlsbestimmungseinrichtung (21) weiterhin eine Entscheidungseinrichtung (23) zum Entscheiden darüber, ob ein Steuerbefehl aus einer ersten Eingabe, die über eine Eingabeeinrichtung (5, 7) empfangen wird, bestimmt werden kann, oder ob zusätzlich eine zweite Eingabe über die zweite Eingabeeinrichtung (7, 5) notwendig ist, um den Steuerbefehl zu bestimmen, umfasst.

8. Vorrichtung gemäß Anspruch 6 oder 7, in der die Befehlsbestimmungseinrichtung (21) weiterhin eine Kombinationseinrichtung (25) zum Kombinieren einer Eingabe, die über die haptische Eingabeeinrichtung (5) empfangen wird, und einer Eingabe, die über die akustische Eingabeeinrichtung (7) empfangen wird, vor dem Bestimmen des Steuerbefehls umfasst.

9. Vorrichtung gemäß einem der Ansprüche 6 bis 8, die weiterhin eine Speichereinrichtung (19) zum Speichern der Eingabe, die über die haptische und/oder akustische Eingabeeinrichtung (5, 7) empfangen wird, vor dem Bestimmen des Steuerbefehls umfasst.

10. Verfahren zum Eingeben von Daten unter Verwendung einer Vorrichtung, die eine haptische Eingabeeinrichtung (5) und eine akustischen Eingabeeinrichtung (7) und eine Schalteinrichtung (13) zum Schalten zwischen den Eingabeeinrichtungen umfasst, das die Schritte umfasst:
Empfangen einer Eingabe über eine der Eingabeeinrichtungen (5, 7),
Schalten von der einen Eingabeeinrichtung (5, 7) zu der anderen Eingabeeinrichtung (7, 5) bei Empfang eines Schaltbefehls (208, 209, 308, 309, 408, 409) durch die Schalteinrichtung (13), und
Empfangen einer Eingabe über die andere Eingabeeinrichtung (7, 5),
wobei die Eingabe von der Vorrichtung über lediglich eine Eingabeeinrichtung (5, 7) zu einer Zeit empfangen wird,
und das weiterhin den Schritt des Detektierens eines Hintergrundgeräuschniveaus (407) durch eine Spracherkennungseinrichtung (11) umfasst, die Teil der akustischen Eingabeeinrichtung (9) ist, und in dem der Schritt des Schaltens (408 + 409) ein automatisches Schalten von der akustischen Eingabeeinrichtung (7) auf die haptische Eingabeeinrichtung (5) umfasst, wenn das Hintergrundgeräuschniveau höher als eine vorbestimmte Schwelle ist.

11. Verfahren gemäß Anspruch 10, in dem der Schritt des Schaltens (308, 309) das Schalten auf die haptische Eingabeeinrichtung (5) bei Betätigung einer Taste umfasst, wobei die Taste Teil der haptischen Eingabeeinrichtung (5) ist.

12. Verfahren gemäß Anspruch 10 oder 11, das weiterhin den Schritt des Ausgebens eines Signals unter Verwendung einer optischen und/oder akustischen Ausgabeeinrichtung (26) in dem Fall umfasst, dass die Schalteinrichtung (13) automatisch von der akustischen Eingabeeinrichtung (7) auf die haptische Eingabeeinrichtung (5) schaltet.

13. Verfahren gemäß einem der Ansprüche 10 bis 12, das weiterhin den Schritt des Bestimmens (204) eines Steuerbefehls aus der empfangenen Eingabe und des Ausgeben des Steuerbefehls an eine elektronische Einrichtung (3) umfasst.

14. Verfahren gemäß Anspruch 13, das weiterhin den Schritt des Speicherns (502, 507) der Eingabe, die von der haptischen und/oder akustischen Eingabeeinrichtung (5, 7) empfangen wird, vor dem Bestimmen des Steuerbefehls umfasst.

15. Verfahren gemäß Anspruch 13 oder 14, das weiterhin den Schritt des Entscheidens (504) darüber, ob aus einer ersten Eingabe (501), die über eine Eingabeeinrichtung (5, 7) empfangen wird, ein Steuerbefehl bestimmt werden kann, oder ob zusätzlich eine zweite Eingabe (506) über die zweite Eingabeeinrichtung (7, 5) notwendig ist, um den Steuerbefehl zu bestimmen, umfasst.

16. Verfahren gemäß einem der Ansprüche 13 bis 15, das weiterhin den Schritt des Kombinierens (508) einer Eingabe (501), die über eine Eingabeeinrichtung empfangen wird, mit einer Eingabe (506), die über die andere Eingabeeinrichtung empfangen wird, vor dem Bestimmen des Steuerbefehls umfasst.

17. Verfahren gemäß einem der Ansprüche 10 bis 16, das weiterhin den Schritt des Ausgebens zumindest eines Teils der Eingabe unter Verwendung einer optischen und/oder akustischen Ausgabeeinrichtung (26) umfasst.

18. Computerprogrammprodukt, das ein oder mehrere computerlesbare Medien umfasst, die computerausführbare Anweisungen besitzen, die dazu geeignet sind, die Schritte des Verfahrens eines der vorherigen Ansprüche auszuführen.

## Revendications

1. Appareil pour commander au moins un dispositif électronique (3), comprenant un moyen d'entrée tactile (5), un moyen d'entrée acoustique (7), et un moyen de commutation (13) destiné à commuter entre le moyen d'entrée acoustique (7) et le moyen d'entrée tactile (5), de sorte qu'une entrée soit reçue par l'appareil par l'intermédiaire d'un seul des moyens d'entrée (5, 7) à la fois,
dans lequel le moyen d'entrée acoustique comprend un moyen de reconnaissance de la parole (11), et dans lequel le moyen de commutation (13) est en outre configuré de façon à effectuer automatiquement une commutation du moyen d'entrée acoustique (7) au moyen d'entrée tactile (5) si une entrée est reçue par l'intermédiaire du moyen d'entrée acoustique (7) et si le moyen de reconnaissance de la parole (11) détecte qu'un niveau de bruit de fond est supérieur à un niveau de seuil prédéterminé.

2. Appareil selon la revendication 1, dans lequel le moyen de commutation (13) comprend un moyen de communication tactile et/ou un moyen de commutation acoustique.

3. Appareil selon l'une quelconque des revendications 1 à 2, comprenant en outre un moyen de sortie optique et/ou acoustique (26) configuré de façon à sortir au moins une partie de l'entrée.

4. Appareil selon la revendication 3, dans lequel le moyen de sortie optique et/ou acoustique (26) est configuré de façon à sortir un signal si le moyen de commutation (13) effectue automatiquement une commutation du moyen d'entrée acoustique (7) au moyen d'entrée tactile (5).

5. Appareil selon l'une quelconque des revendications 1 à 4, dans lequel le moyen d'entrée tactile (5) comprend une touche, et dans lequel le moyen de commutation (13) est configuré de façon à effectuer une commutation vers le moyen d'entrée tactile (5) lors de l'activation de la touche.

6. Appareil selon l'une quelconque des revendications 1 à 5, comprenant en outre un moyen de détermination d'ordre (21) pour déterminer un ordre de commande pour le au moins un dispositif électronique (3) parmi une entrée reçue par l'intermédiaire du moyen d'entrée tactile (5) et/ou du moyen d'entrée acoustique (7).

7. Appareil selon la revendication 6, dans lequel le moyen de détermination d'ordre (21) comprend en outre un moyen de décision (23) destiné à décider si un ordre de commande peut ou non être déterminé parmi une première entrée reçue par l'intermédiaire d'un moyen d'entrée (5, 7) ou si en plus une seconde entrée par l'intermédiaire du second moyen d'entrée (7, 5) est nécessaire pour déterminer l'ordre de commande.

8. Appareil selon la revendications 6 ou 7, dans lequel le moyen de détermination d'ordre (21) comprend en outre un moyen de combinaison (25) destiné à combiner une entrée reçue par l'intermédiaire du moyen d'entrée tactile (5) et une entrée reçue par l'intermédiaire du moyen d'entrée acoustique (7) avant de déterminer l'ordre de commande.

9. Appareil selon l'une quelconque des revendications 6 à 8, comprenant en outre un moyen de stockage (19) destiné à stocker l'entrée reçue par l'intermédiaire du moyen d'entrée tactile et/ou acoustique (5, 7) avant de déterminer l'ordre de commande.

10. Procédé destiné à entrer des données, au moyen d'un appareil comprenant un moyen d'entrée tactile (5) et un moyen d'entrée acoustique (7), et un moyen de commutation (13) destiné à effectuer une commutation entre les moyens d'entrée, comprenant les étapes consistant à :
- recevoir une entrée par l'intermédiaire de l'un des moyens d'entrée (5, 7),
- effectuer une commutation de l'un parmi les moyens d'entrée (5, 7) à l'autre parmi les moyens d'entrée (7, 5) à réception d'un ordre de commutation (208, 209, 308, 309, 408, 409) par le moyen de commutation (13), et
- recevoir une entrée par l'intermédiaire de l'autre parmi les moyens d'entrée (7, 5),
dans lequel l'entrée est reçue par l'appareil par l'intermédiaire d'un seul parmi les moyens d'entrée (5, 7) à la fois,
et comprenant en outre l'étape consistant à détecter un niveau de bruit de fond (407) grâce à un moyen de reconnaissance de la parole (11) faisant partie du moyen d'entrée acoustique (9) et dans lequel l'étape de commutation (408 + 409) comprend une étape consistant à effectuer automatiquement une commutation du moyen d'entrée acoustique (7) au moyen d'entrée tactile (5) si le niveau de bruit de fond est supérieur à un niveau de seuil prédéterminé.

11. Procédé selon la revendication 10, dans lequel l'étape de commutation (308, 309) comprend une étape consistant à effectuer une commutation vers le moyen d'entrée tactile (5) lors de l'activation d'une touche, dans lequel la touche fait partie du moyen d'entrée tactile (5).

12. Procédé selon la revendication 10 ou 11, comprenant en outre l'étape consistant à sortir un signal grâce à un moyen de sortie optique et/ou acoustique (26), dans le cas où le moyen de commutation (13) effectue automatiquement une commutation du moyen d'entrée acoustique (7) au moyen d'entrée tactile (5).

13. Procédé selon l'une quelconque des revendications 10 à 12, comprenant en outre l'étape consistant à déterminer (204) un ordre de commande parmi l'entrée reçue et sortir l'ordre de commande vers un dispositif électronique (3).

14. Procédé selon la revendication 13, comprenant en outre l'étape consistant à stocker (502, 507) l'entrée reçue par l'intermédiaire du moyen d'entrée tactile et/ou acoustique (5, 7) avant de déterminer l'ordre de commande.

15. Procédé selon l'une quelconque des revendications 13 ou 14, comprenant en outre l'étape consistant à décider (504) si parmi une première entrée (501) reçue par l'intermédiaire de l'un parmi les moyens d'entrée (5, 7), un ordre de commande peut ou non être déterminé ou si en plus une seconde entrée (506) par l'intermédiaire du second moyen d'entrée (7, 5) est ou non nécessaire pour déterminer l'ordre de commande.

16. Procédé selon l'une quelconque des revendications 13 à 15, comprenant en outre l'étape consistant à combiner (508) une entrée (501) reçue par l'intermédiaire d'un moyen d'entrée avec une entrée (506) reçue par l'intermédiaire de l'autre moyen d'entrée avant de déterminer l'ordre de commande.

17. Procédé selon l'une quelconque des revendications 10 à 16, comprenant en outre l'étape consistant à sortir au moins une partie de l'entrée grâce à un moyen de sortie optique et/ou acoustique (26).

18. Produit-programme informatique comprenant un ou plusieurs supports qui peuvent être lus par un ordinateur ayant des instructions qui peuvent être exécutés par un ordinateur, adapté pour mettre en oeuvre les étapes du procédé selon l'une quelconque des revendications précédentes.
